(19) Europäisches Patentamt
European Patent Office
Office européen des brevets

(11) Veröffentlichungsnummer: **0 403 971 A2**

# (12) EUROPÄISCHE PATENTANMELDUNG

(21) Anmeldenummer: **90111321.7**

(51) Int. Cl.5: **G11B 7/24**

(22) Anmeldetag: **15.06.90**

(30) Priorität: **22.06.89 DE 3920421**

(43) Veröffentlichungstag der Anmeldung:
**27.12.90 Patentblatt 90/52**

(84) Benannte Vertragsstaaten:
**AT BE CH DE DK ES FR GB IT LI NL SE**

(71) Anmelder: **RÖHM GMBH**
**Kirschenallee**
**D-6100 Darmstadt(DE)**

(72) Erfinder: **Endres, Bernhard, Dr.**
**Martin-Buber-Strasse 73a**
**D-6100 Darmstadt(DE)**
Erfinder: **Omeis, Jürgen, Dr.**
**Barkhausstrasse 65**
**D-6100 Darmstadt(DE)**

## (54) Verfahren zur Herstellung optischer Komponenten (II).

(57) Die Erfindung betrifft ein Verfahren zur Herstellung optischer Komponenten auf der Basis von polymeren Trägern, die mindestens einen Farbstoff enthalten wobei man das optische Verhalten eines Systems S, bestehend aus dem nicht-cholesterischen und nicht twisted-nematischen polymeren organischen Träger T und mindestens einem Farbstoff F durch Einstrahlen monochromatischen, circular polarisierten Lichts, dahingehend verändert, daß das System S das optische Verhalten eines cholesterischen Materials annimmt, mit der Maßgabe, daß der Farbstoff F so ausgewählt wird, daß sein Absorptionsverhalten der Wellenlänge des verwendeten Lichtes angepaßt ist.

EP 0 403 971 A2

## Gebiet der Erfindung

Die Erfindung betrifft ein Verfahren zur Herstellung optischer Komponenten auf der Basis organischer polymerer Träger und unter Verwendung zirkular polarisierten Lichtes.

## Stand der Technik

Zwischen der festen, kristallinen Phase und der fluiden Schmelze treten bei bestimmten Substanzen Zwischenphasen auf, die in struktureller und dynamischer Hinsicht Eigenschaften sowohl des geordneten kristallinen Zustands als auch des ungeordneten Schmelzzustandes in sich vereinen. Solche Phasen sind zwar fluide, weisen aber z.B. optische Eigenschaften auf, die charakteristisch für die Mehrheit kristalliner, aber auch teilkristalliner Stoffe sind: sie sind z.B. doppelbrechend. Man spricht aus unmittelbar einsichtigen Grunden von Zwischenphasen ("Mesophasen") oder von flüssigkristallinen Phasen. Diese Zwischenphasen sind z.B. über eine Variation der Temperatur zu erhalten - in diesem Falle spricht man von thermotropen Flüssigkristallen - oder auch in Lösung über Konzentrations-Variation.
Zur Charakterisierung der Existenzbereiche dieser Zwischenphasen gibt man im allgemeinen die z.B. kalorimetrisch oder mittels Polarisationsmikroskop bestimmten Übergangstemperaturen vom kristallinen in den flüssig-kristallinen Zustand sowie vom flüssigkristallinen in den der isotropen Schmelze (Klärpunkt) an. (Vgl. G. Allen & J.C. Bevington Eds., Comprehensive Polymer Science, Vol.5, p. 701 - 732, Pergamon Press 1989).

Die Struktur solcher Mesophasen ist nun dadurch gekennzeichnet, daß im einfachsten Fall für zylinderförmige Moleküle, in der sogenannten nematischen Phase, die Molekülzentren ungeordnet wie in einer isotropen Schmelze verteilt sind, während die Längsachsen der Moleküle parallel zueinander orientiert sind. Das ist abweichend vom Zustand in der isotropen Schmelze, wo die Molekülachsen statistisch verteilt vorliegen. Die Folge sind anisotrope mechanische, elektrische aber auch optische Eigenschaften. Bei der cholesterischen Phase kommt als zusätzliches Ordnungsprinzip eine kontinuierliche helikale Variation der Orientierungsrichtung der Moleküllangsachsen hinzu, was zu besonderen optischen Eigenschaften, wie starke optische Aktivität oder Selektivreflexion von Licht, führt. Bei den sogenannten smektischen Phasen tritt schließlich in Ergänzung zu der bereits beschriebenen Orientierungsordnung, wie sie für den nematischen Zustand charakteristisch ist, eine regelmäßige Anordnung der Molekülschwerpunkte im Raum hinzu, z.B. nur entlang einer räumlichen Achse aber auch in anderen smektischen Modifikationen entlang zwei oder gar drei voneinander unabhängiger Achsen. Dennoch sind diese Phasen fluide. (Vgl. Ullmanns Encyclopädie der Technischen Chemie, Aufl. Bd. 11, 657 - 671, Verlag Chemie 1976; H.F. Mark et al. Encyclopedia of Polymer Science and Engineering, 2nd Ed., Vol. 9, 1 - 61, J. Wiley & Sons 1987).
Flüssigkristalline Polymere haben u.a. als technische Fasern und zur Informationsspeicherung Anwendung gefunden. Entsprechende Vorrichtungen zur Informationsspeicherung werden in den DE-A 36 03 266 und der DE-A 36 03 267 und ein Verfahren zur reversiblen optischen Datenspeicherung wird in der DE-A 36 03 267 angegeben. Gemäß der DE-A 36 23 395 wird die Photoisomerisierung eines orientierten Films eines flüssigkristallinen Polymeren, zur reversiblen optischen Informationsspeicherung genutzt.

In der (nicht vorveröffentlichten) DE-A 38 10 722 ist eine Vorrichtung zur reversiblen optischen Informationsspeicherung unter Verwendung von Polymeren als Speichermedium beschrieben, die einen Film aus einem amorphen Polymeren enthält und eingerichtet ist, um mittels einer lokalen Variation der Molekülordnung unter Anwendung polarisierten Lichtes die Information einzuspeichern.
Vorzugsweise enthält das Speichermedium eine in ihrem Absorptionsverhalten der Emissionswellenlänge des Schreiblasers angepasste photochrome Substanz, womit die lokale Variation der Molekülordnung induziert werden kann.

## Aufgabe und Lösung

Wie die Durchsicht des Standes der Technik zeigt, bestehen jeweils bestimmte strukturelle Anforderungen im molekularen Bereich, die erfüllt sein müssen, um ein Polymer zum Datenträger zu qualifizieren. Zwar lassen sich die mittels Energieübergang herbeigeführten lokalen Variationen, die gleichbleibend mit dem Einschreiben von Information sind, phänomenologisch beschreiben, aber das heißt noch nicht, daß die Effekte mechanistisch restlos verstanden sind. Dementsprechend gering ist auch die Voraussagbarkeit hinsichtlich weiterführender Variationen im Hinblick auf die Strukturen oder auf die physikalische Beeinflussung.

Andererseits besteht unvermindert die Aufgabe, Systeme zur Verfügung zu stellen, die, ohne einen sehr komplexen Aufbau zu besitzen und ohne den apparativen Aufwand bedeutend steigern zu müssen, als optische Komponenten dienen können, die sich insbesondere für die Datenspeicherung und verwandte Aufgaben eignen. Es wurde nun gefunden, daß die vorliegende Aufgabe in völlig unerwarteter Weise durch das erfindungsgemäße Verfahren gelöst werden kann.

Die Erfindung betrifft ein Verfahren zur Herstellung optischer Komponenten auf der Basis von polymeren Trägern T, die mindestens einen Farbstoff F enthalten, wobei das optische Verhalten eines Systems S bestehend aus dem nicht-cholesterischen und nicht twisted-nematischen polymeren organischen Träger T und mindestens einen Farbstoff F, wobei der Farbstoff so ausgewählt wird, daß er unter Einfluß des verwendeten Lichtes eine Änderung der Molekülgeometrie erfährt, durch Einstrahlen monochromatischen, vorzugsweise kohärenten, circular polarisierten Lichtes dahingehend verändert wird, daß das System S das optische Verhalten eines cholesterischen Materials annimmt.

Die erfindungsgemäß erforderliche Abstimmung von Farbstoff und Schreiblaser bedeutet nicht, daß die Wellenlänge des Schreiblasers mit dem Absorptionsmaximum des Farbstoffs übereinstimmen muß, da z.B. eine Photoisomerisierung auch bei Bestrahlung außerhalb des Absorptionsmaximums stattfindet. (Vgl. J.F. Rabek, Mechanisms of Photophysical Processes and Photochemical Reactions in Polymers, J. Wiley 1987). Die beobachteten Effekte stehen im Einklang mit der Annahme als nehme das System S das optische Verhalten eines cholesterischen Materials an. Sollten weitere Ergebnisse nicht oder nicht völlig mit der Annahme des optischen Verhaltens eines cholesterischen Materials übereinstimmen, so soll daraus kein Abweichen von der erfindungsgemäßen Lehre gefolgert werden, da die technische Anwendbarkeit dadurch nicht negativ beeinflußt wird.

Wie bereits vorstehend erläutert, kann als Charakteristikum für cholesterisches Material gelten, daß die flüssigkristallinen Elementarbereiche schraubenförmig angeordnet sind. Es liegen also helicale Bereiche vor, bei denen der Abstand zwischen zwei identisch ausgerichteten Schichten die "Ganghöhe" der Helix darstellt. (Vgl. H.F. Mark et al. loc.cit).

Der polymere organische Träger T

Als polymere organische Träger T kommen an sich bekannte polymere Materialien infrage, die den oben definierten Bedingungen genügen, d.h. sie sind im allgemeinen per se nicht-cholesterisch und nicht twisted-nematisch.

Vorzugsweise besitzt der polymere organische Träger T eine Glastemperatur Tg von mindestens -40 Grad C. Es kann weiter vorteilhaft sein, wenn der polymere organische Träger T eine Glastemperatur Tg von mindestens 0 Grad C, speziell von wenigstens 20 Grad C besitzt. In der Regel liegt die Glastemperatur Tg der polymeren organischen Träger Tg unterhalb 220 Grad C, mit Betonung des Bereichs unterhalb 180 Grad C.

Zur Bestimmung der Glastemperatur vgl. H.F. Mark et al., Encyclopedia of Polymer Science and Engineering, 2nd Ed., Vol, 7, pp. 531 - 544, J. Wiley & Sons 1989. Die Glastemperaturen von Homopolymeren sind im allgemeinen bekannt. Die Glastemperaturen von Copolymerisaten lassen sich weitgehend vorherbestimmen. (Vgl. Brandrup-Immergut, Polymer Handbook, 2nd Ed. Wiley-Interscience 1975; Vieweg-Esser, Kunststoff-Handbuch, Bd. IX, p. 333 - 341, Carl Hanser Verlag, München 1975).

Die polymeren organischen Träger T enthalten in der Regel Bausteine, die elektrische Anisotropie besitzen bzw. sind aus elektrisch anisotropen Monomeren aufgebaut. Zweckmäßigerweise besitzt der polymere organische Träger T eine Molekülmasse von $5 \times 10^3$ bis $5 \times 10^6$ g/Mol (bestimmt nach den für den infragestehenden Polymertyp maßgeblichen Methoden, vgl. H.F. Mark et al., Encyclopedia of Polymer Science & Engineering, 2nd Ed., Vol. 10, p. 1 - 19, J. Wiley & Sons 1989). Vorzugsweise zeigt der polymere organische Träger T eine makroskopisch orientierte flüssigkristalline nematische Phase.

Eine günstige Ausführungsform der polymeren organischen Träger T stellen flüssigkristalline Seitenkettenpolymere dar, die hinsichtlich Aufbau und Herstellung vorzugsweise an den Stand der Technik anschließen. (Vgl. C.B. McArdle, Side Chain Liquid Crystal Polymers, Blackie, Glasgow & London 1989).

Diese bestehen ganz oder teilweise aus repetierenden Einheiten, die schematisch durch die allgemeine Formel I

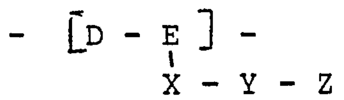

I

wiedergegeben werden können, wobei D - E die Elemente der Hauptkette des Polymerisats
X eine funktionelle Gruppe
Y eine abstandhaltende Einheit ("Spacer") und
Z eine mesogene Seitengruppe bezeichnet.

Dabei sind die mesogenen Seitengruppen verantwortlich für den resultierenden Flüssig-Kristall-Charakter.

Die Einheiten - [D - E] - welche die Elemente der Hauptkette bilden, leiten sich in der Regel von bekannten polymerisations- oder polykondensationsfähigen Monomeren ab.
Von besonderer Bedeutung sind dabei die folgenden Typen von Hauptketten-Einheiten - [D - E] - und die diese bildenden Monomeren :
- [$CH_2$ - $CR_1$] - wobei $R_1$ für Wasserstoff, Methyl, substituiertes Phenyl steht und die Monomeren dem Typ der Acrylsäureester (mit Tg ≧ 20 Grad C) bzw. Amide, der Methacrylsäureester bzw. Amide, der Styrole unter Einbeziehung substituierter insbesondere $C_1$ - $C_4$ alkyl-substituierter Derivate (Tg ≧ 50 Grad C) steht, oder
- [$CH_2$ - CH - O] - vom Typ der Polyether (Tg ≧ 0 Grad C)

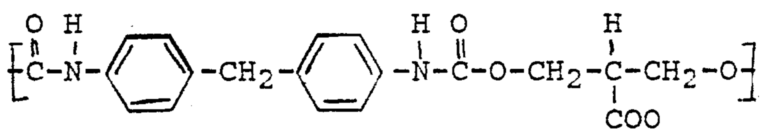

vom Typ der Polyurethane (Tg ≥ 40 Grad C teilkristallin)

- [$OCH_2$-$C_6H_4$-$CH_2$-OOC-CH-CO] vom Typ der Polyester, (Tg ≧ 40 Grad C, teilkristallin)

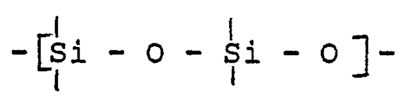

vom Typ der Polysiloxane (Tg ≧ -40 Grad C)

Die Einheiten X stehen definitionsgemäß für eine funktionelle Gruppe zwischen Spacereinheit und Polymerhauptkette; bei radikalisch polymerisierbaren Monomeren sind diese Gruppen in der Regel für die Aktivierung der zwischen D und E ausgebildeten Mehrfachbindung verantwortlich.
In der Regel ist die Einheit X ausgewählt aus der Gruppe bestehend aus den Resten -$C_6H_4$-; -COO-; -$CONR_2$-; -O-;

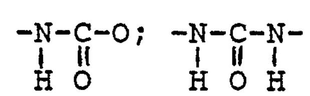

wobei $R_2$ für Wasserstoff oder einen Alkylrest mit 1 bis 6, vorzugsweise 1 bis 3 Kohlenstoffatomen steht.

Die Spacereinheiten Y stellen den erforderlichen Abstand zwischen den mesogenen Gruppen Z und der Polymerhauptkette her. Sie bilden in der Regel eine vorzugsweise flexible Kette mit 1 bis 14 Kettengliedern, insbesondere eine Alkylengruppe -$(CH_2)_n$- worin n für 1 bis 14 steht, wobei gegebenenfalls einzelne Kettenglieder substituiert sein können, beispielsweise mit $C_1$-$C_4$-Alkylresten oder mit Halogen wie Chlor oder Fluor oder worin einzelne Kettenglieder durch eine Etherbrücke ersetzt sein können, oder einen Phenylenrest. Die Herstellung der verschiedenen polymeren organischen Träger mit den geforderten Eigenschaften ist an sich bekannt (vgl. DE-A 36 23 395). Als mesogene Seitengruppen können als solche bekannte Gruppen angewendet werden.

Eine Aufstellung geeigneter mesogener Gruppen findet sich in Kelker and Hatz, Handbook of Liquid

Crystals, Verlag Chemie 1980, pp. 67 - 113.
In typischer Weise über die Einheiten X - Y gebunden ist eine beispielsweise aromatische Reste enthaltende mesogene Gruppe Z, die vorzugsweise durch die Formel

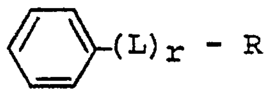 II

wiedergegeben werden kann, worin L für eine Brücke, bestehend aus den Resten -N = N-

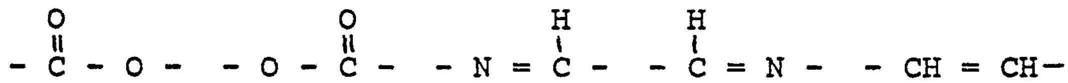

oder für einen Rest

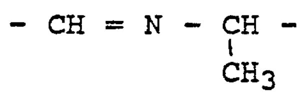 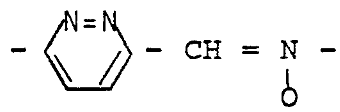 $-C \equiv C-$,

r für Null oder Eins und R für einen Rest

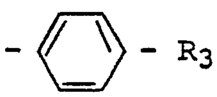 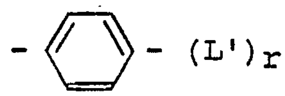 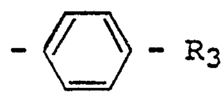

oder, falls r für Null steht, R auch für einen Rest

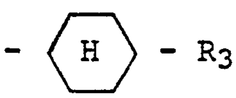 steht,

wobei L′ und r′ die gleiche Bedeutung wie L bzw. r besitzen und worin R3 für Wasserstoff, $(O)_s$-$(CH_2)_t$-H, -CN oder Halogen, insbesondere Fluor, Chlor oder Brom und t und t′ für eine Zahl von 1 bis 8, insbesondere 1 - 6, und s für Null oder 1 steht.

Besonders genannt seien Polymere der Formel I, worin Z für die folgenden mesogenen Gruppen steht:

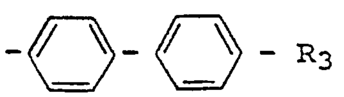, 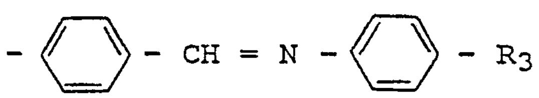,

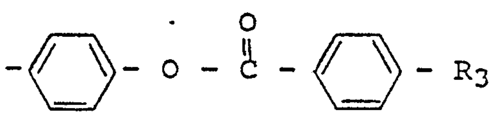, 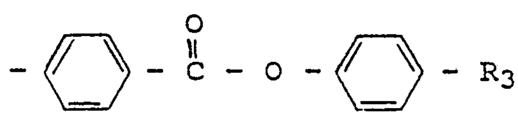,

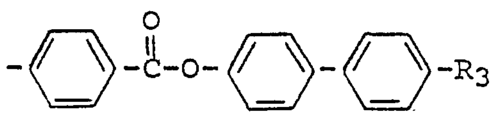, 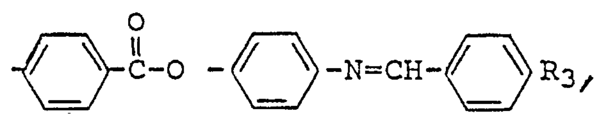,

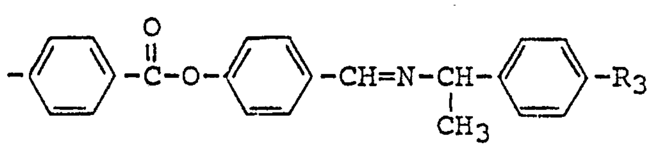, 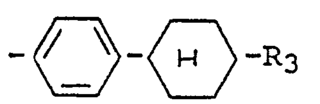

Besonders bevorzugt gehen die Hauptketten-Einheiten - [D-E] - aus der (radikalischen) Polymerisation von Monomeren der schematischen Formel III hervor

D = E - X - Y - Z (III)

worin D, E, X, Y und Z Bedeutungen gemäß Formel I besitzen.

Insbesondere den Monomeren der Formel III in denen D = E-X- für einen Rest

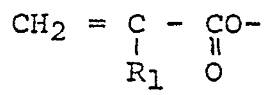

oder einen Rest

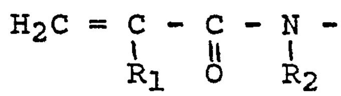

worin $R_1$ und $R_2$ die oben angegebenen Bedeutungen besitzen, also den Estern bzw. Amiden der (Meth)-acrylsäure, kommt Interesse zu.

Bei einer besonders bevorzugten Ausführungsart der vorliegenden Erfindung steht Z für das farbgebende Strukturelement, stellt also den Farbstoff F (siehe folgenden Abschnitt) dar. Wie bereits ausgeführt, kann der Anteil der den Farbstoff F enthaltenden monomeren Bausteine an polymeren organischen Träger 0 bis 100 Gew.-% der gesamten Monomeren ausmachen, vorzugsweise liegt der Anteil bei ≧ 50 Gew.-%, in der Regel bei ≧ 10 Gew.-% und bei mindestens 0.1 Gew.-%.

Der Farbstoff

Definitionsgemäß enthält der polymere organische Träger T mindestens einen Farbstoff F. Der Farbstoff F ist vorzugsweise dadurch charakterisiert, daß er unter Einwirkung des monochromatischen, circular polarisierten Lichts Änderungen seiner Molekülgeometrie erfährt. Damit ist jedoch nicht verbunden, daß die Wellenlänge des eingestrahlten Lichts, in der Regel die des Schreiblasers, mit dem Absorptionsmaximum des bzw. der Farbstoffe übereinstimmen muß, da z.B. eine Photoisomerisierung auch bei Bestrahlung außerhalb des Absorptionsmaximums stattfindet. Im übrigen gelten gewisse für Farbstoffe, die in Flüssigkristall-Systemen zur Anwendung kommen sollen, entwickelte Kriterien. (Vgl. J. Constant et al., J. Phys. D; Appl. Phys. Vol. II, S. 479 ff (1978); F. Jones u. T.J. Reeve, Mol. Cryst. Liq. Cryst. Vol. 60, S. 99 ff, EP 43 904, EP 55 838, EP 65 869). So sollen diese Farbstoffe im elektrischen Feld nicht ionisieren und sie sollen einen hohen molekularen Extinktionskoeffizienten besitzen.

Im allgemeinen gehorchen die erfindungsgemäß anwendbaren Farbstoffe F der vorgegebenen Definition, daß ihre Absorptionsmaxima im Wellenlängenbereich 300 - 1 000 nm liegen.

Zweckmäßigerweise enthält der Farbstoff F mindestens ein Strukturelement, das unter der definierten Lichteinwirkung seine Geometrie ändert.

Solche Strukturelemente können z.B. Mehrfachbindungen enthalten, insbesondere weisen sie die Möglichkeit der cis-trans-Isomerie auf. Weiter kann es sich um andere tautomeriefähige Systeme handeln, beispielsweise solche, die auf einer Ringöffnung und/oder einem Protonenübergang beruhen. In der Regel besitzt der Farbstoff F in seiner Vorzugsrichtung eine Länge von mindestens 10 A. Als Beispiele für Brückengruppen - A - , die die geometrische Isomerie ermöglichen, seien die folgenden genannt.

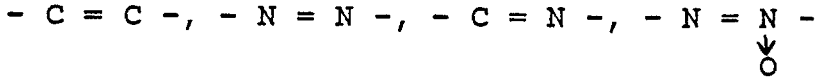

Insbesondere enthalten die Farbstoffe F solche Gruppen, bei denen zwei aromatische Ringe bzw. Ringsysteme durch eine Brückengruppe - A - verknüpft sind.

Es handelt sich also im naheliegendsten Fall um Derivate des Stilbens, des Azobenzols, des Azoxybenzols, der Azomethine usw.

Desweiteren enthalten die Farbstoffe F vorteilhaft an sich bekannte Substituenten, welche bestimmend für

die Absorptionscharakteristika individueller Farbstoffe sind. (Vgl. Ullmanns Encyklopädie der Techn. Chemie, 3. Auflage, Bd.7, S. 153-183, Urban & Schwarzenberg 1956). Als geeignete Gruppen können z.B. die Cyanogruppe oder auxochrome Gruppen gelten, u.a. elektronenliefernde Substituenten wie (gegebenenfalls alkylierte) Amino-, Oxy- (Hydroxy-) bzw. Alkoxygruppen als auch Gruppen mit entgegengesetztem Effekt wie Nitro-, Nitroso-, Carbonyl-, Halogen-Gruppen u.ä. Eine besonders interessante Klasse stellen Azofarbstoffe dar, die den vorstehend erläuterten Kriterien genügen.

Entsprechende Azofarbstoffe sind z.B. in DE-A 34 06 209, DE-A 34 29 438, EP-A 65 869, M. Eich et al., Proc. SPIE-Int. Soc. Opt. Eng. 628 (Mol. Polym. Optoelectron. Mater.: Fundam. Appl.), S. 93 - 96 (1987) angegeben worden. Als Modelle für erfindungsgemäß mit Vorteil anzuwendende Farbstoffe werden die folgenden Strukturen der Formel IV betrachtet, die - wie bereits ausgeführt - als (niedermolekulare) Farbstoffe F praesent oder Bestandteile der polymeren organischen Träger T sein können:

AS - A - AS' IV

wobei - A - die oben angegebenen Bedeutungen als Brückengruppen vorzugsweise die Bedeutung - N = N - oder - CH = CH - besitzen soll, und wobei das System sowohl (die an sich bekannten) Substituenten mit Elektronendonatorenwirkung als auch mit Elektronenakzeptorwirkung besitzen kann.

AS hat dabei insbesondere die Bedeutung eines aromatischen Systems, vorzugsweise mit mindestens 6 und bis 14 Ringkohlenstoffatomen - insbesondere die Bedeutung Phenyl - das - soweit es Bestandteil des polymeren organischen Trägers T ist - vorzugsweise über eine elektronenliefernde Brückengruppe wie eine Ethergruppe oder eine gegebenenfalls mit $C_1$-$C_4$-alkylsubstituierte Aminogruppe über einen weiteren zweckmäßig verknüpften substituierten Phenylrest, oder auch direkt mit der abstandhaltenden Einheit (Spacer = Y in Formel II) verknüpft ist. AS bzw. AS' können besonders als Bestandteile eines niedermolekularen Farbstoffs F die aus der industriellen Farbstoffchemie bekannten Substituenten wie $C_1$-$C_4$-Alkyl, Halogen, Cyan aber auch polare Gruppen wie z.B. die -COOH, -$SO_3H$, oder -OH-Gruppen, tragen. AS' hat ebenfalls die Bedeutung eines aromatischen Systems, vorzugsweise mit mindestens 6 und bis 20 Ringkohlenstoffatomen, vorzugsweise enthaltend wenigstens einen substituierten Phenylrest.

Beispielhafte Substituentenmuster des Phenylrests in AS' bestehen aus:

wenigstens einer Nitrogruppe in ortho- oder para-Stellung zur Haftstelle von A, vorzugsweise in para-Stellung, gegebenenfalls mindestens einer Alkoxygruppe, vorzugsweise mit 1 bis 4 Kohlenstoffatomen,

gegebenenfalls mindestens einem Halogen-, insbesondere Chlorsubstituenten in ortho-, meta- und/oder para-Stellung,

einem weiteren, über Brückengruppe A, insbesondere über eine Azogruppe verknüpften aromatischen Rest AS'', der (analog AS' aufgebaut) wiederum wie vorstehend angegeben substituiert sein kann,

oder einem Substituenten

$$(CN)_2C{=}CH-, \quad (CN)_2C = \overset{CN}{\overset{|}{C}} -, \quad -CF_3$$

Als Prototypen für Strukturen der Formel IV seien erwähnt:

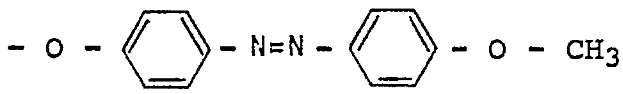

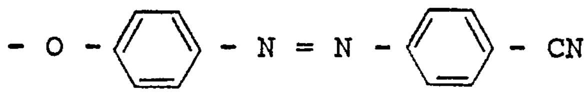

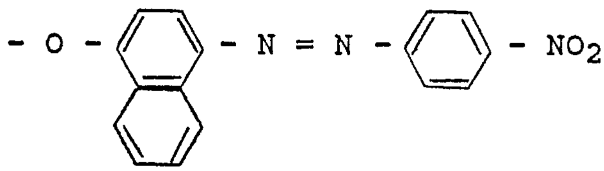

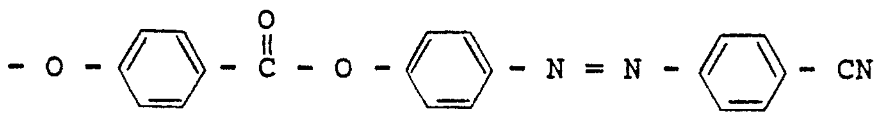

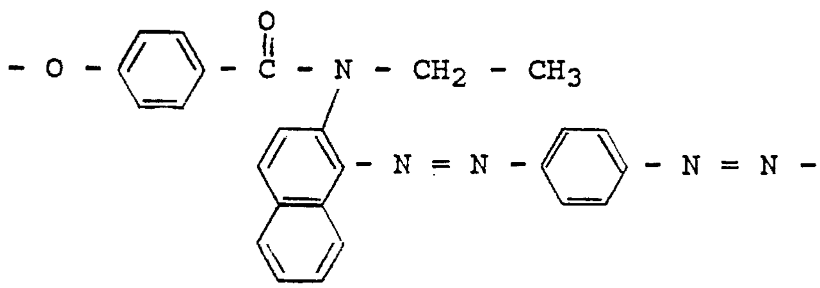

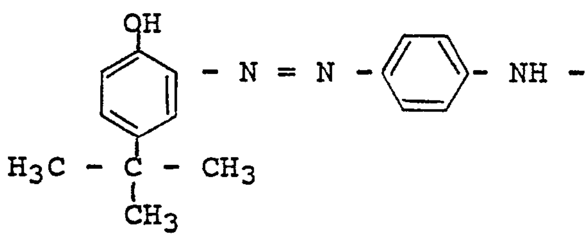

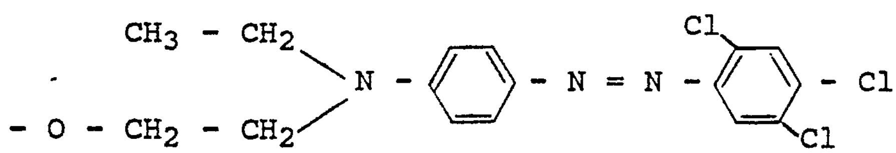

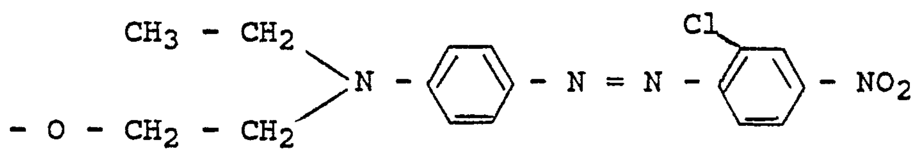

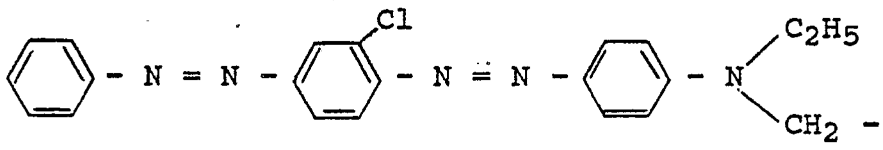

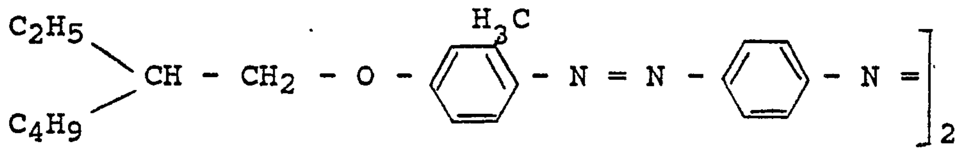

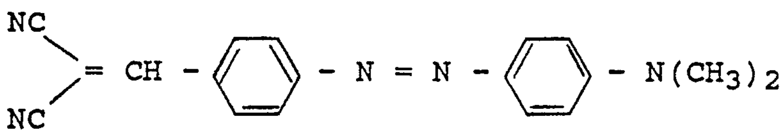

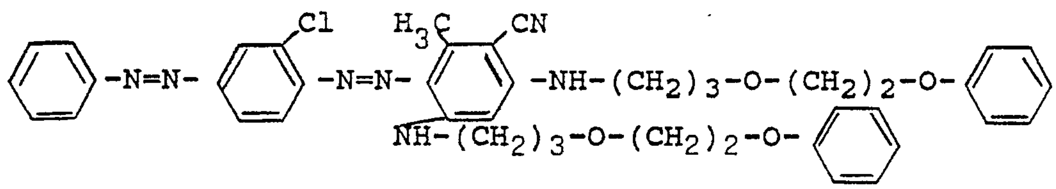

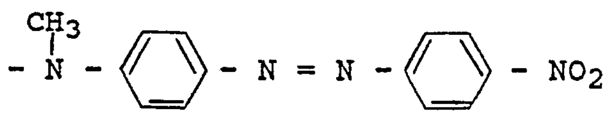

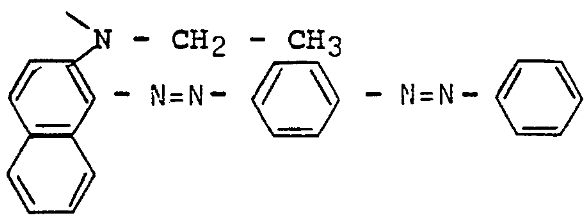

Die obigen Strukturelemente können (z.B. an den für eine Substitution vorgesehenen Stellen verknüpft) als farbgebendes Strukturelement Z fungieren, oder sie können soweit erforderlich, in geeigneter Weise z.B. durch Wasserstoff oder $C_1$-$C_4$-Alkyl oder Benzyl substituiert als niedermolekulare Farbstoffe F erfindungsgemäß eingesetzt werden.

Als Monomeren der Formel III, in denen Z ein farbgebendes Strukturelement darstellt, (wodurch also der Farbstoff F an den polymeren organischen Träger T gebunden wird) seien beispielsweise besonders genannt:

| $CH_2 = CR_1- X - Y - Z$ | | | | Absorption maximum |
|---|---|---|---|---|
| $R_1$ | X | Y | Z | |
| H, $CH_3$ | $-\underset{\underset{O}{\|}}{C}-O-$ | $(CH_2)_n$ n = 2-6 | 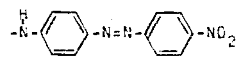 | ca. 460 nm |
| " | " | " | 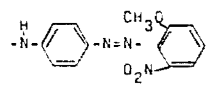 | ca. 424 nm |
| " | " | " | 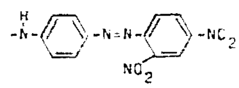 | ca. 513 nm |
| " | " | " | 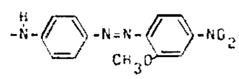 | ca. 469 nm |
| " | " | " | 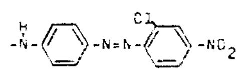 | ca. 482 nm |
| " | " | " | 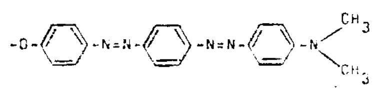 | ca. 476 nm |
| " | " | 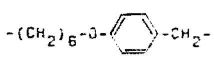 | 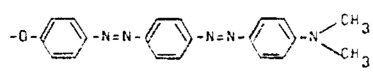 | ca. 480 nm |
| " | " | 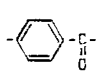 | 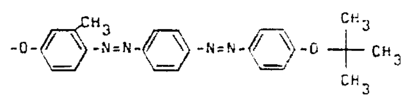 | ca. 500 nm |

Die Herstellung der genannten Monomeren der Formel III ergibt sich beispielsweise aus Acta Polym. 38, 643 (1987).

Eine weitere Möglichkeit der Herstellung der erfindungsgemäßen optischen Komponenten besteht in der Nutzung der cis-trans-Umwandlung, beispielsweise von Stilbenderivaten. Genannt seien die Verbindungen der Formel IV, worin A für eine Brückengruppe

$$\underset{|}{HC} = \overset{|}{CH}$$

steht, beispielsweise worin AS für einen in para-Stellung dialkylamino-substituierten Phenylrest und AS′ für einen Phenylrest mit para-Nitrosubstitution steht, wobei gegebenenfalls die Polymerverknüpfung über die Aminogruppe erfolgt. Das 4-Nitro-4′-dimethylaminostilben hat beispielsweise eine λ max bei 450 nm. Genannt seien weiter die Verbindungen:

$$CH_2 = \underset{R_1}{\underset{|}{C}} - \underset{O}{\underset{\|}{C}} - O - (CH_2)_6 - O - C_6H_4 - CH = CH - C_6H_4NO_2$$

wobei $R_1$ die vorstehend definierte Bedeutung besitzt.

Eine weitere erfindungsgemäß interessante Gruppe stellen die Cyaninfarbstoffe mit der Grundstruktur

$$>\overset{\oplus}{N} = CH - (CH=CH)_n - N<$$

dar.

Genannt sei z.B. das 3,3′,9-Triethyl-thiacarbocyaninbromid (λ max = 550 nm).
Die Möglichkeit der Isomerisierung kann ferner mit einem indigoiden System, beispielsweise der Formel V, bzw. einem entsprechenden Monomer

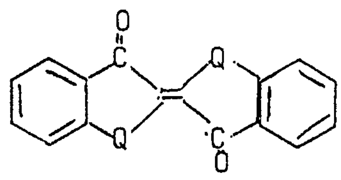

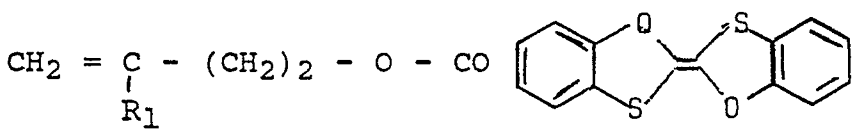

worin Q für $NR_4$, worin $R_4$ für einen Alkylrest mit 1 bis 4 Kohlenstoffatomen, oder worin $R_4$ für die Anbindung an den polymeren Träger steht oder Q für Schwefel steht (Thioindigo λ max = 546 nm) erreicht werden. Weitere erfindungsgemäß verwendbare Systeme stellen Spiropyrane wie das Dimethyl-6′-nitroindolinospirobenzopyran oder das Benzothiazolinospiropyran dar.

Der Farbstoff F kann, wie bereits ausgeführt, dem System S beigemischt sein, er kann aber auch kovalent an den polymeren organischen Träger T gebunden sein. Im allgemeinen liegt die Konzentration des Farbstoffs F im Bereich > 10 Gew.-%, üblicherweise im Bereich > 50 Gew.-% aber bei mindestens 0,1 Gew.-%.

Besondere Ausführungsarten

Wie bereits ausgeführt, wird das System S bei Betrieb als optische Komponente vorteilhaft auf eine Temperatur gebracht, die zwischen 20 Grad C unterhalb Tg des Systems und einem Wert unterhalb Tn,i (Übergang in die isotrope Phase) liegt, insbesondere auf einem Wert, der zwischen Tg und Tn,i liegt.
Die Temperatur des Systems S läßt sich - unter Ausnutzung der Erfahrungen des Standes der Technik - über die Intensität des eingestrahlten Lichtes steuern.

Man kann die Temperatur des Systems S durch externe Temperaturkontrolle in an sich bekannter Weise in den erforderlichen Temperaturbereich bringen.

Vorteilhaft ist auch eine Ausführungsart, bei der das System S auf einem Trägersubstrat Ts angeordnet ist, wobei zweckmäßigerweise das Trägersubstrat TS einen im Absorptionsmaximum des Farbstoffs F und im Anwendungsbereich transparenten, geeignet geformten, d.h. in der Regel planen Festkörper darstellt. Besonders geeignet sind z.B. Mineralglas oder organische Gläser. Alternativ kann das System S auch einen selbsttragenden Film bilden.

Vorteilhafte Wirkungen

Als herausragende Anwendung der erfindungsgemäß hergestellten optischen Komponenten bietet sich die Speicherung optischer Information an, wobei bis zu einem gewissen Grad auf die Erfahrungen des Standes der Technik zurückgegriffen werden kann.
Sie eignen sich z.B. hervorragend für optische Displays, beispielsweise farbige Displays.
Von besonderer Bedeutung ist ferner die Anwendung in der Holographie. (M.Francon, Holographie, Springer-Verlag 1972; Holography Techniques & Proceedings, Ed. W.P.O.Jüpner, SPIE, Proceedins, Vol. 1026).
Weitere vorteilhafte Anwendungsgebiete liegen im Bereich der Lichtoptik. So lassen sich die erfindungsgemäßen optischen Komponenten als Polarisationsfilter verwenden. Ein besonderer Aspekt liegt in der Möglichkeit der Drehung der Polarisationsrichtung einfallenden Lichtes.

Das Verfahren zur optischen Datenspeicherung

1. der Einschreibprozeß

Das Verfahren zur optischen Datenspeicherung für zirkular polarisierte Lichtquellen sei anhand der den Versuchsaufbau darstellenden Vorrichtung gemäß Abb. 1 beschrieben.

Diese Vorrichtung bedient sich einer Strahlenquelle mit monochromatischem, linear polarisiertem Licht definierter Wellenlänge (z.B. Argon-Ionen-Laser). Der linear polarisierte Strahl wird durch ein optisches System den Erfordernissen entsprechend aufgeweitet. Durch das λ/4-Plättchen (bzw. den Kompensator) wird das aufgeweitete, linear polarisierte Licht wahlweise in rechtszirkulares oder in linkszirkulares Licht übergeführt.

Mit dem zirkular polarisierten Licht geeigneter Intensität werden nun definierte Bereiche der Probe bestrahlt. (Spezielle Geometrien können z.B. über eine vor der Probe angebrachte Maske erzielt werden).

2. Nachweis der optisch induzierten Eigenschaften

Eine Möglichkeit, die optisch induzierten Eigenschaften der Materialgruppe zu erfassen, bietet der in Abb. 2 schematisch dargestellte Versuchsaufbau. Für diesen Nachweis wird eine Strahlungsquelle mit monochromatischem, linear polarisiertem Licht einstellbarer Wellenlänge (z.B. Argon-Ionen-Laser) verwendet. Der linear polarisierte Strahl wird durch ein optisches System den Erfordernissen ensprechend aufgeweitet. Durch das λ/4-Plättchen bzw. den Kompensator wird das Licht den Erfordernissen entsprechend in zirkular (links bzw. rechts), elliptisch (links bzw. rechts) und linear polarisiertes Licht übergeführt. Durch die Photodiode wird das Transmissionsverhalten der Probe als Funktion des Kippwinkels in Abhängigkeit vom Polarisationszustand des Lichtes gemessen.

Die nachfolgende Beispiele dienen zur Erläuterung der Erfindung.

BEISPIELE

A. Beispiele für optische Komponenten

Beispiel A1

Als Modellsystem wird das im folgenden dargestellte Copolymere verwendet:

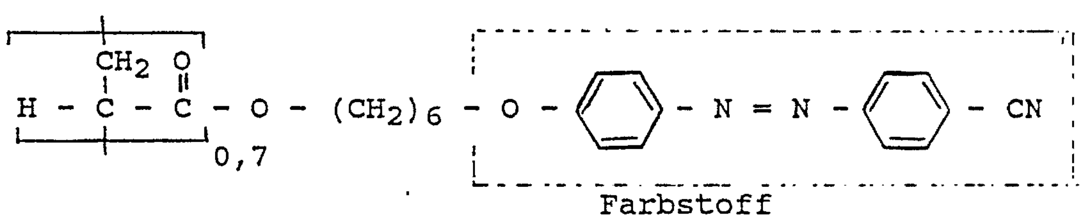

Farbstoff

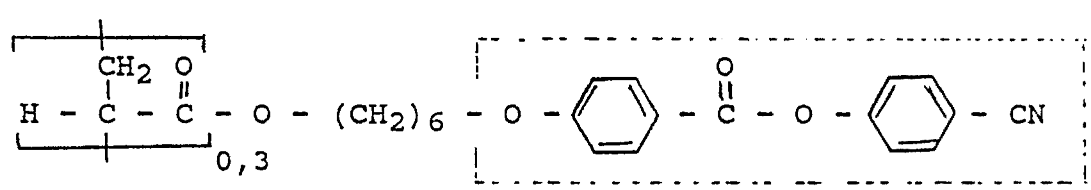

mesogene Gruppe

Als organischer polymerer Träger T dient in diesem Beispiel eine Polyacrylatkette an die über Spacer (sechs Methylengruppen) mesogene Gruppen (Phenylbenzoate) befestigt sind.
Als Farbstoff-Gruppen F sind Azobenzol-Gruppen kovalent am organischen polymeren Träger T befestigt.

Die Präparation der Probenzellen erfolgt nach dem Spin-bzw. Ziehverfahren in dünner Schicht auf vorbehandelten Objektträgern (Glassubstrat mit einer geriebenen Polyimidschicht). Der Glasobjektträger (50 mm x 50 mm) wird mit einer 10 - 20 %igen Lösung des Modellsystems in einer $CH_2Cl_2$-Lösung beschichtet. Die Schichtdicke bewegt sich zwischen 0,5 und 2,0 $\mu$m. Beschichtung und Trocknungsprozeß erfolgen bei Raumtemperatur. Danach wird die Probe kurz auf 127 Grad C aufgeheizt und langsam (1 -10 min) auf 100 Grad C abgekühlt und 10 min getempert.

Es resultiert ein flüssigkristalliner Polymerfilm mit Monodomänenstruktur. Diese so behandelte Probe wird nun in der beschriebenen Vorrichtung (Abb. 1) mit zirkular polarisiertem Licht (wahlweise rechts- oder linkszirkular) geeigneter Intensität und definierter Wellenlänge bestrahlt. Die durch dieses Verfahren optisch induzierten neuen Eigenschaften des Materials werden dann folgendermaßen mit dem in Abb. 2 dargestellten Versuchsaufbau nachgewiesen.

a) Ergebnisse für den Einschreibprozeß mit rechtszirkular polarisiertem Licht.

Zwei Proben des Modellsystems gemäß Beispiel 1 werden nach dem oben beschriebenen Verfahren präpariert. Probe I wird anschließend mit rechtszirkularem Licht der Wellenlänge $\lambda_s$ = 488 nm, Probe II wird mit rechtszirkularem Licht der Wellenlänge $\lambda_s$ = 514,5 nm in der Vorrichtung gemäß Abb. 1 bestrahlt (Int. = 300 mW/cm$^2$, t = 4 min). Anschließend werden die Proben in der Vorrichtung gemäß Abb. 2 vermessen. Hierbei wird die Transmission der Probe I bzw. der Probe II in Abhängigkeit des Kippwinkels $\theta$ (siehe Abb. 2) für rechtszirkulares und anschließend für linkszirkulares Licht bestimmt. Die dabei verwendete Wellenlänge $\lambda_d$ entspricht dabei zunächst der jeweiligen Schreibwellenlänge der einzelnen Proben (Probe I:$\lambda_s$ = $\lambda_d$ = 488 nm, Probe II: $\lambda_s$ = $\lambda_d$ = 514,5 nm). Die Intensität des zur Messung verwendeten Lichtes liegt unter 1 mW/cm$^2$. Die Ergebnisse dieser Messungen sind in Abb. 3 und Abb. 4 dargestellt.

Überraschenderweise zeigen die beiden Proben I (Abb. 3) und II (Abb. 4) gegenüber linkszirkular und rechtszirkular polarisiertem Licht jeweils ein unterschiedliches Transmissionsverhalten, das sie vor dem Schreibprozeß nicht aufgewiesen haben. Es zeigt sich, daß für gleiche Wellenlängen $\lambda_s$ und $\lambda_d$ beim Schreib- bzw. Leseexperiment der maximale Unterschied im Transmissionsverhalten für links- und rechtszirkular polarisiertes Licht bei etwa $\theta \approx$ 90 Grad liegt, was dem Einschreibwinkel beim Schreibprozeß entspricht.

Untersucht man die Probe II ($\lambda_s$ = 514,5 nm) in der Vorrichtung gemäß Abb. 2 bei einer Wellenlänge von $\lambda_d$ = 488 nm so erhalt man das in Abb. 5 dargestellte Ergebnis.

In diesem Experiment ($\lambda_s$ = 514,5 nm;$\lambda_d$ = 488 nm) sind die beobachteten Minima in der Transmission von rechtszirkularem Licht zu Winkeln von $\theta_1$ = 82 Grad und $\theta_2$ = 97 Grad C verschoben.

In den bisher beschriebenen Lese-Experimenten wurde bei der Detektion der Winkel $\theta$ bei einem festen Polarisationszustand des Lichtes verändert. Im folgenden werden die Ergebnisse von Experimenten beschrieben, bei denen der Winkel $\theta$ konstant gehalten, der Polarisationszustand des Lichtes jedoch verändert wird.

Im Experiment gemäß Abb. 2 wird der Winkel $\theta$ für die einzelnen Proben auf den Wert eingestellt, für den sich der größte Unterschied im Transmissionsverhalten zwischen rechts- und linkszirkularem Licht ergibt (Probe I:$\lambda_s$ = $\lambda_d$ = 488 nm $\rightarrow$ $\theta$ = 88 Grad, Probe II: $\lambda_s$ = $\lambda_d$ = 514,5 nm $\rightarrow$ $\theta$ = 92 Grad; Probe II:$\lambda_s$ = 514,5 nm$\lambda_d$ = 488 nm $\rightarrow \theta$ = 97 Grad).

Die Transmission der Probe wird dann als Funktion des Polarisationszustandes des einfallenden Lichtes bei konstantem Winkel gemessen. Die Ergebnisse dieser Experimente sind in den Abb. 6 bis Abb. 8 dargestellt. Es wurde die Transmission über dem relativen Drehwinkel des $\lambda$/4-Plättchens (bzw. Kompensators) angegeben. Zur Verdeutlichung des Polarisationszustandes des auf die Probe fallenden Lichtes sind spezielle Zustände (linkszirkular, rechtszirkular, linear) markiert.

b) Ergebnisse für den Einschreibprozeß mit linkszirkularem Licht.

Die Ergebnisse für den Einschreibprozeß mit linkszirkularem Licht sind mit denen des Einschreibprozesses mit rechtszirkularem Licht dahingehend vergleichbar, daß Minima im Transmissionsverhalten für linkszirkulares Licht beobachtet werden, während rechtszirkular polarisiertes Licht diesen Effekt **nicht** zeigt.

Die beschriebenen experimentellen Ergebnisse zeigen, daß das optische Verhalten der Probe von der Einschreibwellenlänge$\lambda_s$, der Auslesewellenlänge $\lambda_d$, dem Polarisationszustand des Schreiblichtes und des Leselichtes und vom Auslesewinkel $\theta$ unter Berücksichtigung des Einschreibwinkels abhängt.

B. Herstellung der verwendeten Polymeren

Beispiel B1.

Herstellung eines Copolymeren aus den Monomeren

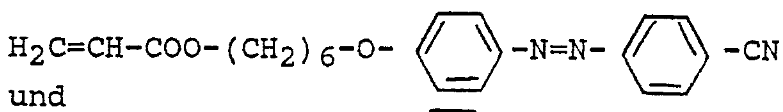 (Monomer III-A)

und

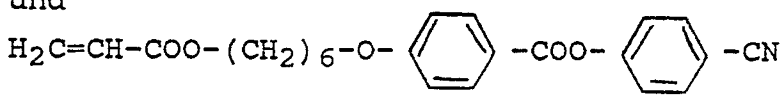 (Monomer III-B)

im Gewichtsverhältnis 70 : 30:

10,6 g (= 28,2 mmol) Monomer III-A und 4.4 g (= 11,1 mmol) Monomer III-B werden in 30 ml 1.4 Dioxan gelöst und in einem Schlenk-Kolben mehrfach entgast und mit Helium gespült. Nach Zugabe von je 5 mmol % (bezogen auf die Gesamtheit der Monomeren) Azoisobuttersäurenitril (AIBN) und 2,2′-Azobis-(2,4-dimethylvaleronitril) wird bei 70 Grad C 24 Stunden polymerisiert. Der Initiator wird in diesem Zeitraum 4-6 mal neu zudosiert. Anschließend wird in 600 ml· Methanol gefällt. Dieser Vorgang wird so lange wiederholt, bis das Polymer frei von Monomeren ist. Das Polymere wird bei 30 Grad C im Vakuum bis zur Gewichtskonstanz getrocknet.
Ausbeute: 7,3 - 9,0 g = 49 - 59 % d.Th.
Mw = 9 000 g/mol
U = 0,4

Beispiel B2

Herstellung eines Copolymeren aus den Monomeren:

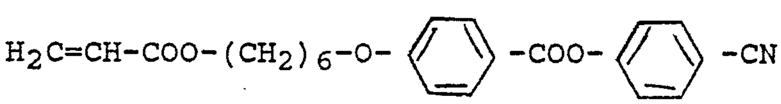 (Monomer III-C)

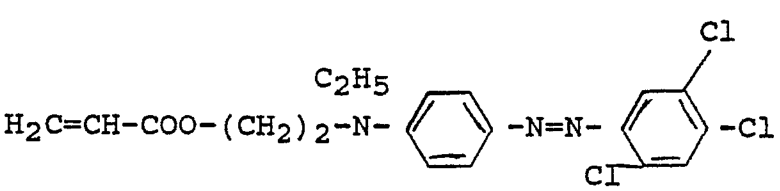 (Monomer III-D)

3,6 g (= mmol) Monomer III-C und 0,4 g (= mmol) Monomer III-D werden in 8 ml absolutem 1,4-Dioxan gelöst und wie unter B1 beschrieben polymerisiert. Die Initiatormenge beträgt jeweils 1 mol% AIBN und 2,2′-Azobis-(2,4-dimethyl) valeronitril, die gleiche Menge wird innerhalb der ersten 3 Stunden dreimal nachdosiert.
Das Polymer wird 2 x in 500 ml Methanol gefällt und anschließend bei 30 Grad C im Vakuum getrocknet.
Ausbeute: 3 g = 75 % d.Th.
Mw = 21 000 g $Mol^{-1}$, λ max = 450 nm
Tg = 36 Grad C.

## Ansprüche

1. Verfahren zur Herstellung optischer Komponenten auf der Basis von polymeren Trägern, die mindestens einen Farbstoff enthalten, dadurch gekennzeichnet, daß man das optische Verhalten eines Systems S, bestehend aus dem nicht-cholesterischen und nicht twisted-nematischen polymeren organischen Träger T und mindestens einem Farbstoff F durch Einstrahlen monochromatischen, circular polarisierten Lichts, dahingehend verändert, daß das System S das optische Verhalten eines cholesterischen Materials annimmt, mit der Maßgabe, daß der Farbstoff F so ausgewählt wird, daß sein Absorptionsverhalten der Wellenlänge des verwendeten Lichtes angepaßt ist.

2. Verfahren gemäß Anspruch 1, dadurch gekennzeichnet, daß der polymere organische Träger T mesogene Gruppen kovalent gebunden enthält, die zu makroskopisch orientierten Bereichen strukturiert werden können.

3. Verfahren gemäß den Ansprüchen 1 und 2, dadurch gekennzeichnet, daß der polymere organische Träger T im amorphen Zustand vorliegt.

4. Verfahren gemäß den Ansprüchen 1 und 2, dadurch gekennzeichnet, daß der polymere organische Träger T im flüssigkristallinen unorientierten Zustand vorliegt.

5. Verfahren gemäß den Ansprüchen 1 und 2, dadurch gekennzeichnet, daß der polymere organische Träger im flüssigkristallinen orientierten Zustand vorliegt.

6. Verfahren gemäß den Ansprüchen 1 bis 5, dadurch gekennzeichnet, daß das circular polarisierte Licht monochromatisches Licht darstellt.

7. Verfahren gemäß Anspruch 1, dadurch gekennzeichnet, daß der polymere organische Träger T eine makroskopisch orientierte flüssigkristalline nematische Phase zeigt.

8. Verfahren gemäß Anspruch 1, dadurch gekennzeichnet, daß die Absorptionscharakteristika des Farbstoffs F und die Wellenlänge des eingestrahlten circular polarisierten Lichts um nicht mehr als 150 nm voneinander abweichen.

9. Verfahren gemäß den Ansprüchen 1 und 8, dadurch gekennzeichnet, daß der Farbstoff F unter der Einwirkung des circular polarisierten Lichtes Änderungen der Molekülgeometrie erfährt.

10. Verfahren gemäß Anspruch 9, dadurch gekennzeichnet, daß der Farbstoff F mindestens ein der cis-trans-Umwandlung zugängliches Strukturelement besitzt.

11. Verfahren gemäß Anspruch 9, dadurch gekennzeichnet, daß der Farbstoff F mindestens ein Ringsystem enthält, das unter Lichteinwirkung geeigneter Wellenlänge Ringöffnung erleidet.

12. Verfahren gemäß Anspruch 11, dadurch gekennzeichnet, daß der Farbstoff F mindestens eine Gruppe enthält, deren Geometrie sich unter Protonenübergang ändert.

13. Verfahren gemäß den Ansprüchen 1 und 8 bis 12 , dadurch gekennzeichnet, daß der Farbstoff F im Wellenlängenbereich 300 - 1 000 nm sein Absorptionsmaximum hat.

14. Verfahren gemäß den Ansprüchen 1 und 8 bis 10, dadurch gekennzeichnet, daß der Farbstoff zwei durch eine Brücke A, ausgewählt aus der Gruppe -N = N-, -C = N-,

$$-N=\overset{O}{\overset{\uparrow}{N}}-, \quad -C{=}C-,$$

verknüpfte aromatisch Reste besitzt.

15. Verfahren gemäß den Ansprüchen 8 bis 10 und 14, dadurch gekennzeichnet, daß der Farbstoff F ein Azofarbstoff ist.

16. Verfahren gemäß den Ansprüchen 1 bis 15 , dadurch gekennzeichnet, daß der Farbstoff F kovalent an den polymeren organischen Träger T gebunden ist.

17. Verfahren gemäß den Ansprüchen 1 bis 15 , dadurch gekennzeichnet, daß der Farbstoff F dem System S beigemischt ist.

18. Verfahren gemäß den Ansprüchen 1 bis 16, dadurch gekennzeichnet, daß der polymere organische Träger T Bausteine enthält, die elektrische Anisotropie besitzen.

19. Verfahren gemäß den Ansprüchen 1 und 8 bis 10, dadurch gekennzeichnet, daß der Farbstoff F in seiner Vorzugsrichtung eine Länge von mindestens 10 Å besitzt.

20. Verfahren gemäß den Ansprüchen 1 bis 19, dadurch gekennzeichnet, daß der Anteil der Farbstoffmoleküle F bezogen auf die elektrisch anisotropen Gruppen 1 bis 100 Gew.-% beträgt.

21. Verfahren gemäß den Ansprüchen 1 bis 20, dadurch gekennzeichnet, daß der polymere Träger T eine Molekülmasse von $10^3$ bis $10^6$ besitzt.

22. Verfahren gemäß den Ansprüchen 1 bis 21, dadurch gekennzeichnet, daß der polymere organische Träger eine Glastemperatur Tg von mindestens -40 Grad C besitzt.

23. Verfahren gemäß Anspruch 22, dadurch gekennzeichnet, daß der polymere organische Träger T eine Glastemperatur Tg von mindestens 0 Grad C besitzt.

24. Verfahren gemäß Anspruch 23, dadurch gekennzeichnet, daß der polymere organische Träger T eine Glastemperatur Tg von mindestens 20 Grad C besitzt.

25. Verfahren gemäß den Ansprüchen 22 bis 24, dadurch gekennzeichnet, daß die Glastemperatur Tg unterhalb 220 Grad C liegt.

26. Verfahren gemäß Anspruch 1, dadurch gekennzeichnet, daß das System S auf eine Temperatur gebracht wird, die zwischen einem Wert 20 Grad C unterhalb Tg des Systems und einem Wert unterhalb Tn,i (Übergang in die isotrope Phase) liegt.

27. Verfahren gemäß Anspruch 26, dadurch gekennzeichnet, daß das System S auf eine Temperatur gebracht wird, die zwischen Tg und Tn,i liegt.

28. Verfahren gemäß den Ansprüchen 26 und 27, dadurch gekennzeichnet, daß man die Temperatur des Systems S über die Intensität des eingestrahlten Lichts steuert.

29. Verfahren gemäß den Ansprüchen 26 bis 28, dadurch gekennzeichnet, daß man die Temperatur des Systems S durch externe Temperaturkontrolle in den erforderlichen Temperaturbereich bringt.

30. Verfahren gemäß den Ansprüchen 1 bis 29, dadurch gekennzeichnet, daß das System S auf einem Trägersubstrat TS angeordnet ist.

31. Verfahren gemäß Anspruch 30, dadurch gekennzeichnet, daß das Trägersubstrat TS einen im Absorptionsmaximum und im Anwendungsbereich transparenten Festkörper darstellt.

32. Verfahren gemäß Anspruch 31, dadurch gekennzeichnet, daß das Trägersubstrat TS ein Mineralglas oder ein organisches Glas darstellt.

33. Verfahren gemäß den Ansprüchen 1 bis 29, dadurch gekennzeichnet, daß das System S einen selbsttragenden Film darstellt.

34. Verwendung der optischen Komponenten gemäß den Ansprüchen 1 bis 33 zu Speicherung von Information.

35. Verwendung der optischen Komponenten gemäß den Ansprüchen 1 bis 34 als Displays.

36. Verwendung der optischen Komponenten gemäß den Ansprüchen 1 bis 34 für die Holographie.

37. Verwendung der optischen Komponenten gemäß den Ansprüchen 1 bis 33 als Polarisationsfilter.

38. Verwendung der optischen Komponenten gemäß den Ansprüchen 1 bis 33 zur Drehung der Polarisationsrichtung einfallenden Lichtes.

39. Verwendung der optischen Komponenten gemäß Anspruch 35 als farbige Displays.

40. Verwendung der optischen Komponenten gemäß den Ansprüchen 1 bis 34 zur Darstellung unterschiedlicher Information in Abhängigkeit von der Polarisation des einfallenden Lichtes.

41. Verwendung der optischen Komponenten gemäß den Ansprüchen 1 bis 33 als Filter für definierte Wellenlängenbereiche.

42. Verfahren zur Herstellung optischer Komponenten gemäß Anspruch 1, dadurch gekennzeichnet, daß ein und dasselbe optische System S simultan für verschiedene Wellenlängenbereiche präpariert wird.

43. Verfahren zur Herstellung optischer Komponenten gemäß Anspruch 1, dadurch gekennzeichnet, daß die Präparation des Systems S bei einem bestimmten Wellenlängenbereich durch Aufheizen des Systems rückgängig gemacht werden kann.

44. Verfahren zur Herstellung optischer Komponenten gemäß Anspruch 1, dadurch gekennzeichnet, daß das für einen bestimmten Wellenlängenbereich präparierte System S durch erneute Anwendung des Verfahrens für einen weiteren Wellenlängenbereich eingestellt wird.

Abbildungen

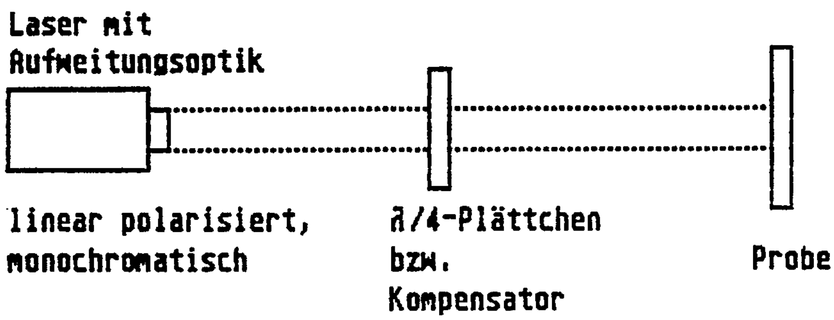


Abb.1: Schematische Darstellung des Versuchsaufbaus zur Durchführung des Einschreibprozesses

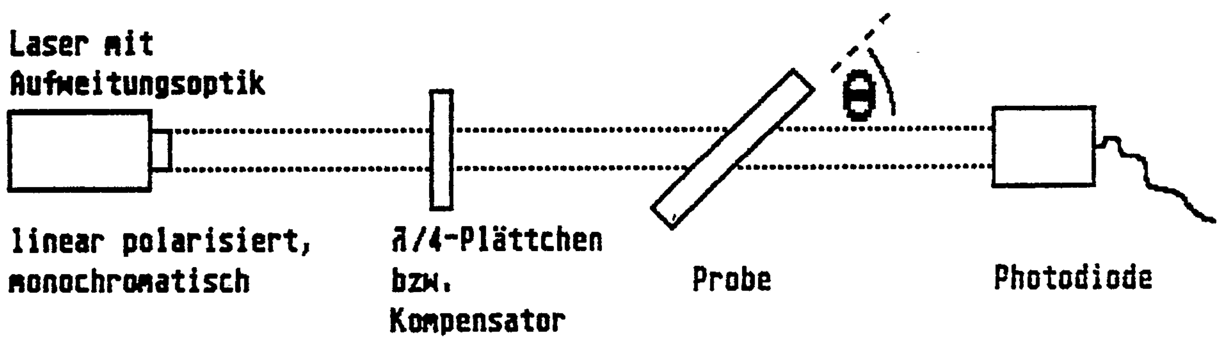


Abb.2: Schematische Darstellung des Versuchsaufbaus zur Durchführung des Leseprozesses

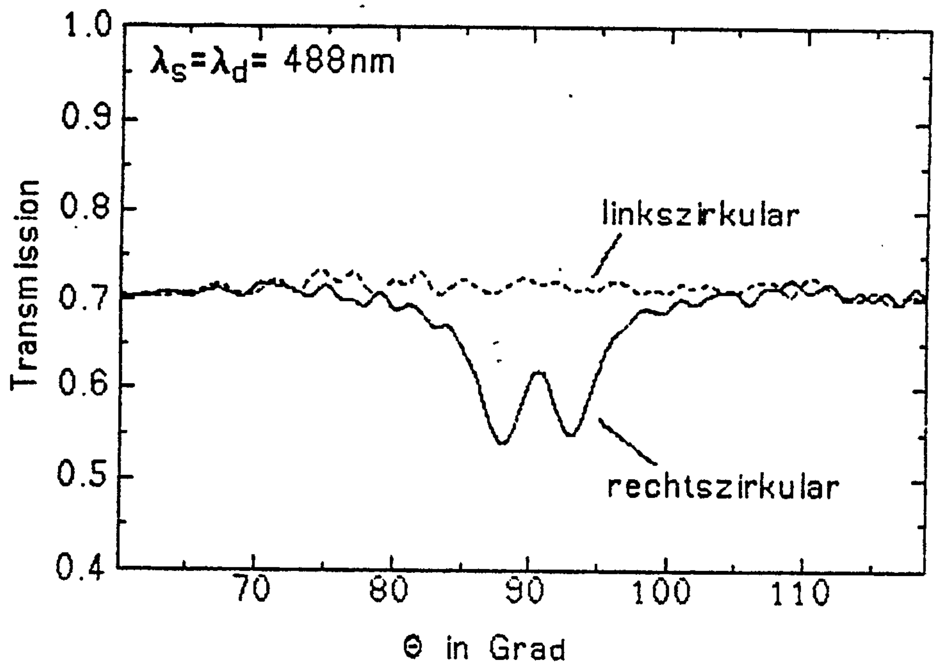


**Abb.3: Transmissionsverhalten der Probe I als Funktion des Winkels Θ für $\lambda_d$=488nm**

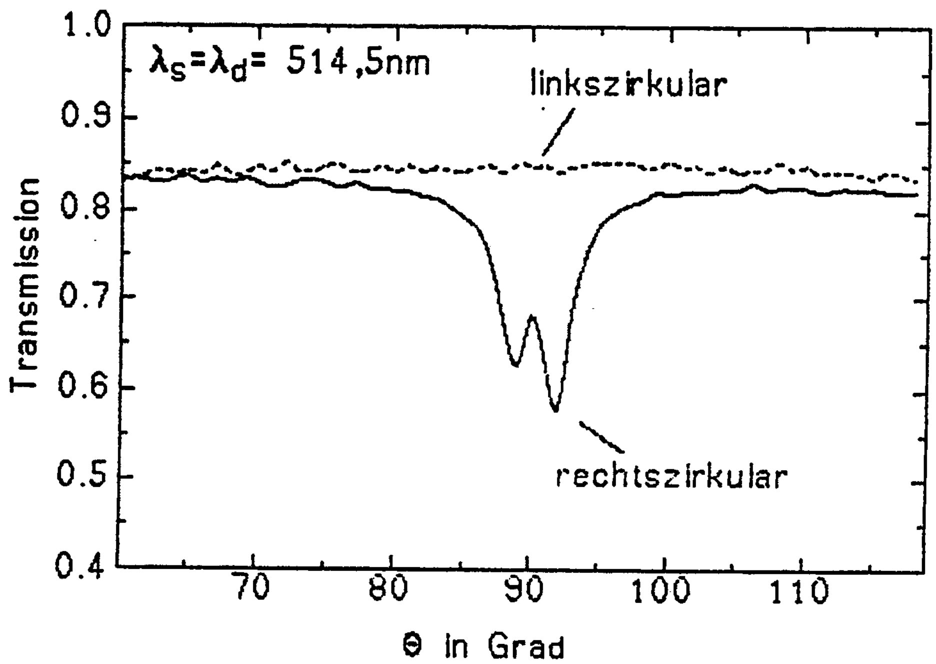


**Abb.4: Transmissionsverhalten der Probe II als Funktion des Winkels Θ für $\lambda_d$=514,5nm**

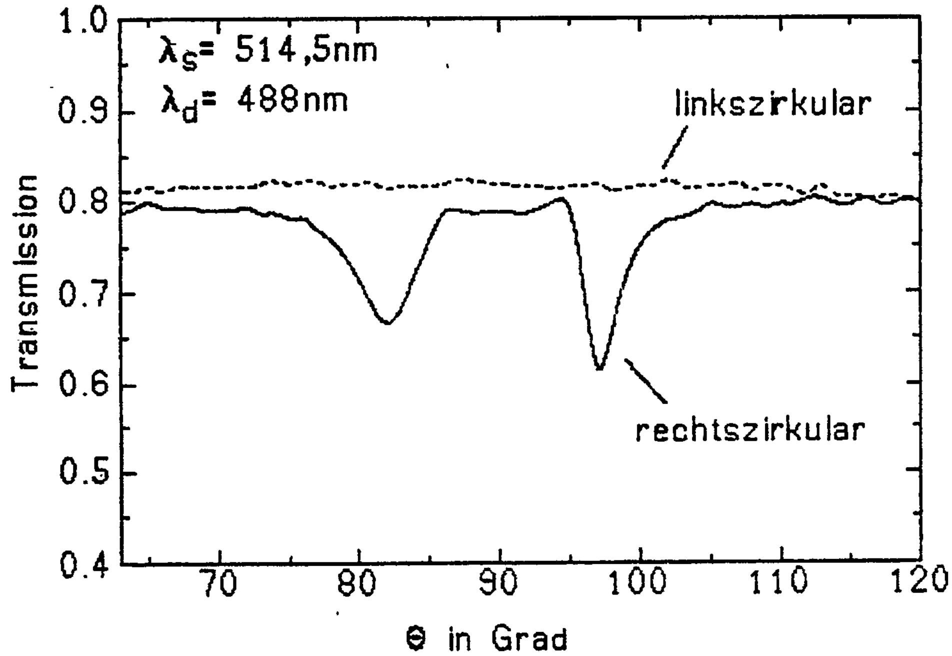


Abb.5: Transmissionsverhalten der Probe II als Funktion des Winkels Θ für $\lambda_d$=488nm

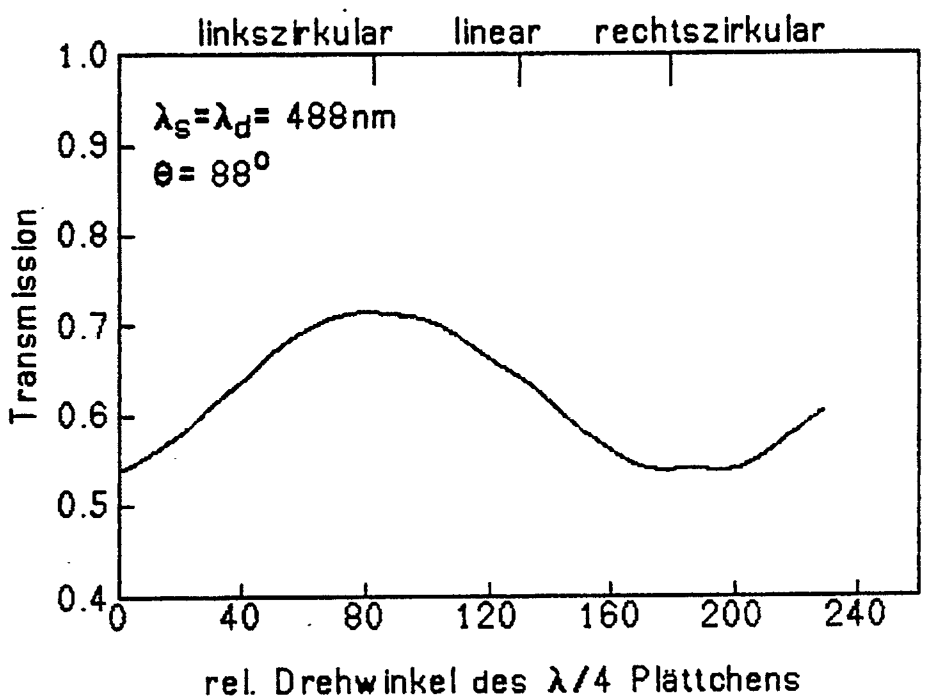


Abb.6: Transmission der Probe I als Funktion des Polarisationszustandes des einfallenden Lichtes ($\lambda_d$=488nm) für Θ = 88°

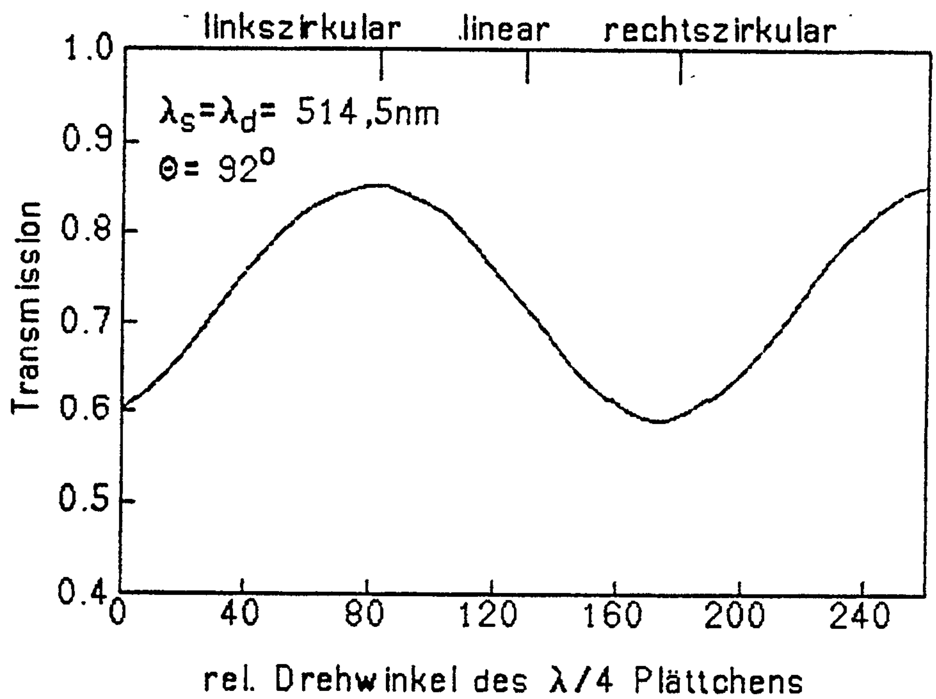


**Abb.7: Transmission der Probe II als Funktion des Polarisationszustandes des einfallenden Lichtes ($\lambda_d$=514,5nm) für $\Theta = 92^o$**

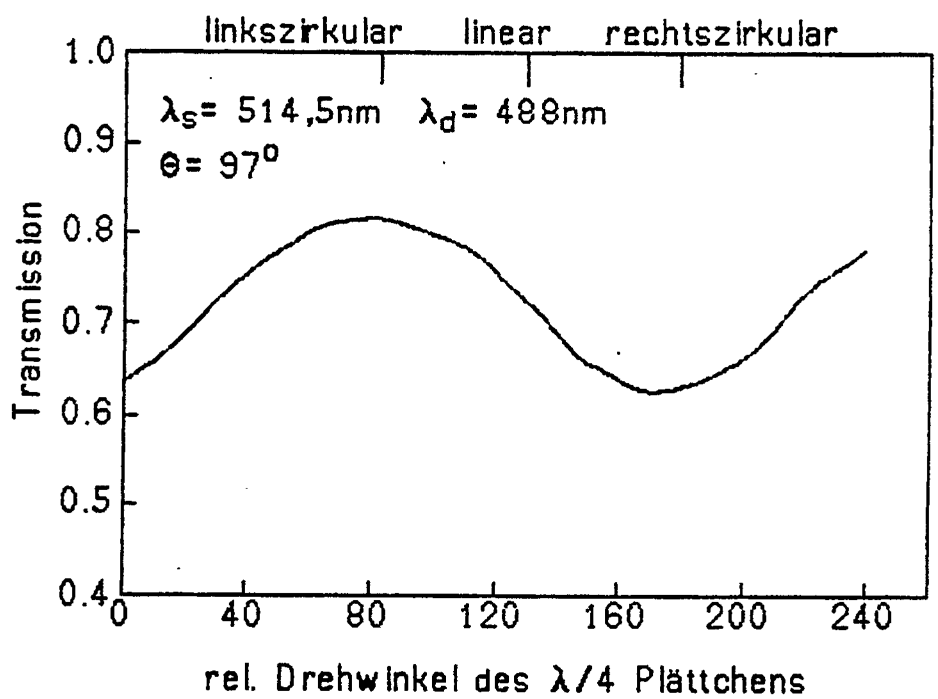


**Abb.8: Transmission der Probe II als Funktion des Polarisationszustandes des einfallenden Lichtes ($\lambda_d$=488nm) für $\Theta = 97^o$**